# EUROPEAN PATENT SPECIFICATION

(11) **EP 0 372 933 B1**
(45) Date of publication and mention of the grant of the patent: **24.05.1995**
(21) Application number: 89312721.7
(22) Date of filing: 06.12.1989
(51) Int. Cl.: H02J 7/35, G06F 1/16, G06F 1/26

(54) **Power supply for portable electric appliances**
Stromversorgung für tragbare elektrische Geräte
Alimentation pour appareils électriques portatifs

(30) Priority: 09.12.1988 JP 160056/88 U
(43) Date of publication of application: 13.06.1990
(73) Proprietor: SEMICONDUCTOR ENERGY LABORATORY CO., LTD., Atsugi-shi Kanagawa-ken, 243 (JP)
(72) Inventor: Nishi, Kazuo, Sagamihara-shi Kanagawa-ken, 229 (JP); Suzuki, Kunio, Tokyo 167 (JP); Kinka, Mikio, Atsugi-shi Kanagawa-ken, 243 (JP); Satake, Akemi, Atsugi-shi Kanagawa-ken, 243 (JP); Kugawa, Shuichi, Atsugi-shi Kanagawa-ken, 243 (JP)
(74) Representative: Milhench, Howard Leslie

(56) References cited:
- EP-A- 0 355 203
- CH-A- 671 485
- DE-A- 3 342 253
- GB-A- 2 166 306
- GB-A- 2 214 008
- US-A- 4 522 047
- US-A- 4 856 605

## Description

### BACKGROUND OF THE INVENTION

The present invention concerns improvements in or relating to power supplies for portable electric appliances.

As the demand increases for portable electric appliances such as lap-top computers and compact word processors, so it is desired also to decrease the size and weight of the appliances. The power sources of many such portable appliances have conventionally been batteries (i.e. dry cells) which, however, give rise to the risk that a user may run out of energy during the course of his business which may be a serious disadvantage if his business is very urgent. Moreover, the question as to where and how to discard exhausted cells gives rise to environmental problems.

Alternatively, built-in solar cells have been used in pocket electric calculators for example. However, the amount of energy produced by such a built-in solar cell is only very small and therefore the application thereof has been limited only to relatively small and low power consumption devices.

In DE-A-3342253 there is described a power supply for a portable tape cassette player which comprises a rechargeable battery located in a battery compartment of the device and arranged to be charged through a charging circuit by a solar cell which is mounted fixedly to the device either directly on a face of the device housing or on a flap hinged onto the device housing.

### SUMMARY OF THE INVENTION

According to the present invention there is provided a portable electric appliance including a power supply fixed to the appliance and comprising a solar cell, a secondary cell connected to said solar cell, and a charging circuit by which electric energy generated by said solar cell may be accumulated in said secondary cell, an electrical connection being provided between said electric appliance and said power supply for supplying electric energy from said secondary cell to said appliance, as is known from DE-A-3342253 aforementioned, the appliance being characterized in accordance with the invention in that said power supply is detachable from said appliance and switch means are provided whereby when said power supply is detached from said appliance said solar cell is connected to said secondary cell for accumulation of solar energy.

As is described more fully hereinafter the power supply of the invention can be detachably mounted on a portable electric appliance. When the portable electric appliance is being used, the power supply is mounted to the appliance in order to power it. When the portable electric appliance is not being used, the power supply may be detached and moved to a place in bright sunlight in order to accumulate sufficient solar energy.

The physical configuration of the power supply may be designed in accordance with that of the electric appliance to which it is mounted. The electric connection between the power supply and the appliance may be accomplished by means of a cable, or alternatively electric contacts may be provided on the power supply at an appropriate position while counterpart contacts are provided on the appliance at a corresponding position in order that the corresponding contacts are coupled with each other when the power supply is mounted with the appliance.

Further features of the invention are set forth with particularity in the appended claims and, together with the features abovementioned, will be more clearly understood from consideration of the following description given with reference to the accompanying drawings.

### BRIEF DESCRIPTION OF THE DRAWINGS

Fig. 1 is a perspective view showing a word processor provided with a power supply in accordance with an exemplary embodiment of the present invention;
Figs. 2 and 3 are perspective and cross-sectional views respectively showing the power supply of the appliance of Fig. 1 in more detail;
Fig. 4 is a highly simplified showing of a power supply in accordance with the present invention; and
Fig. 5 is a detailed circuit diagram of the charging circuit of a power supply in accordance with the present invention.

### DETAILED DESCRIPTION OF THE EMBODIMENT

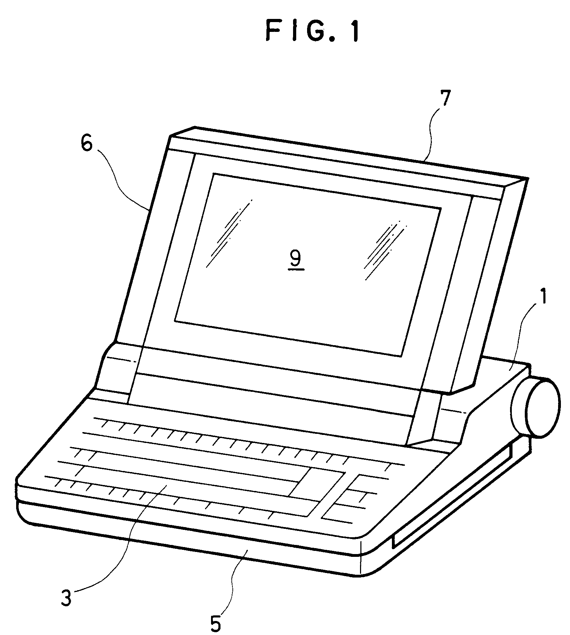

Referring now to Fig. 1, a word processor of a lap-top type provided with a power supply in accordance with the present invention is illustrated. The word processor comprises a processor unit housed in an enclosure 1, a keyboard 3, and a display unit 7 hinged on the enclosure 1 and provided with a non-volatile ferroelectric liquid crystal display 9 on its inner surface. The display unit 7 functions also as a lid of the word processor which covers the keyboard 3 when the appliance is not in use. The bottom of the enclosure 1 is adapted to be coupled with a detachable power supply 5 which supplies electric energy to the processor.

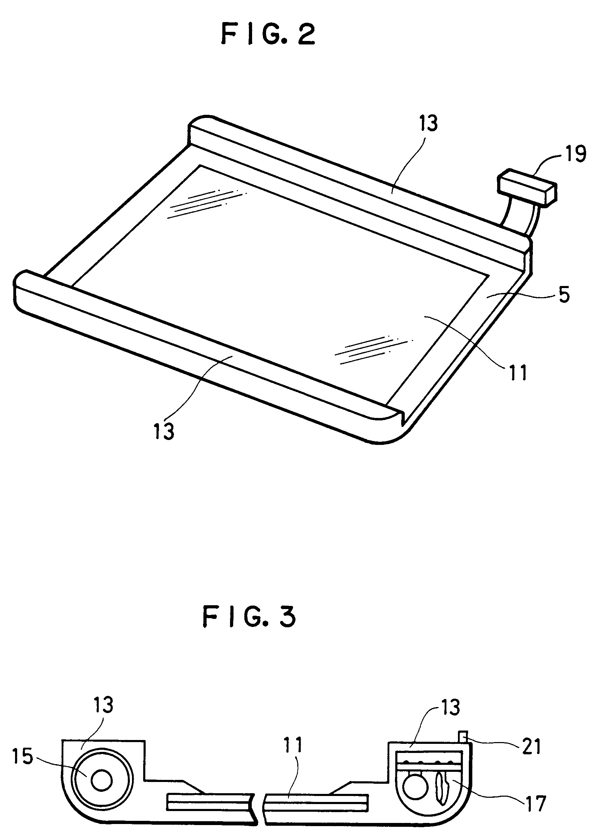

The power supply 5 is illustrated in more detail in Figs. 2 and 3 and comprises a flat panel supporting a solar cell 11 and provided with a pair of housings 13 projected upwards from its opposed edges. The solar cell 11 may for example consist of a series connected array of photoelectric conversion devices which are constructed by providing a lower electrode arrangement on a glass substrate, depositing and patterning an amorphous semiconductor film incorporating a PIN junction, and providing an upper electrode arrangement. The upper electrode arrangement is made from a transparent conductive material such as ITO in order to permit light rays to pass therethrough into the semiconductor. A rechargeable nickel-cadmium cell 15 is placed in one of the housings 13 and a control circuit 17 for determining the charging and discharging of the cell is provided in the outer housing. A connector 19 is provided for supplying energy from the power supply to the word processor.

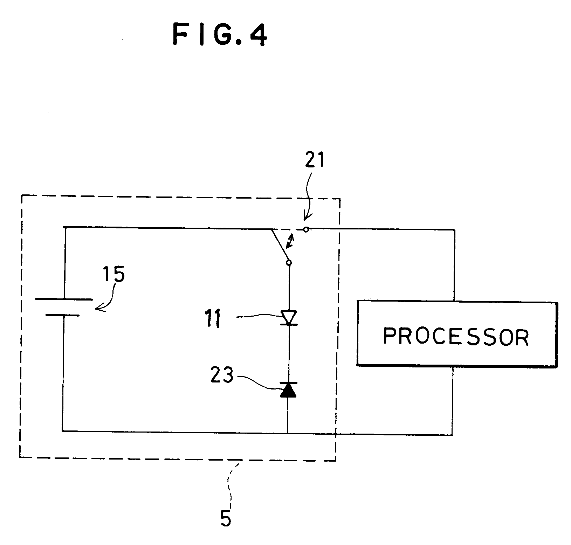

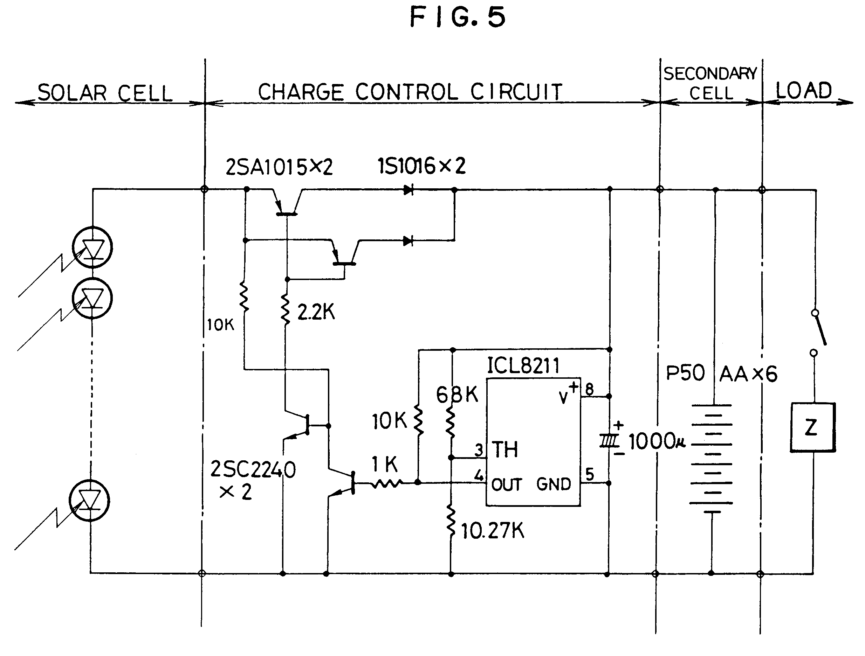

The control circuit 17 is designed so that when the power supply 5 is mounted on the bottom of the enclosure 1 the nickel-cadmium cell 15 is electrically connected with the processor for powering the same, and when the power supply 5 is removed the solar cell 11 is connected with the nickel-cadmium cell 15 in order to store electric energy in the cell. The required switching operation is effected by means of a button 21 which is automatically depressed when the power supply is mounted. Fig. 4 is a highly simplified showing of a power supply in accordance with the present invention. Numeral 23 designates a diode for blocking reverse current. Fig. 5 is a circuit diagram showing a practical example of the charging and discharging circuit. The circuit includes an IC chip which is coupled with the secondary cell 15 in order to detect the voltage level applied to the secondary cell. When the voltage exceeds a threshold level predetermined and set up at an input terminal of the chip, the IC chip produces a signal indicative that the voltage across the secondary cell is too high. The signal is supplied to a transistor circuit which breaks the connection between the secondary cell and the solar cell in order not to apply an overvoltage to the secondary cell.

In operation, when it is desired to use the word processor the power supply 5 is mounted on the bottom of the enclosure 1 to power the processor, and when the word processor is not being used the power supply may be detached from the enclosure 1 and the solar cell 11 exposed to direct illumination by solar radiation. Of course, by exposing the solar cell to external light and placing some weight upon the button 21 to put the power supply into its charging condition, solar energy can be accumulated while the word processor operates.

While a particular embodiment of the invention has been specifically described by way of example, it is to be appreciated that the present invention is not limited to the particular example described and that modifications and variations can be made without departing from the scope of the invention as defined by the appended claims. Some examples of such modifications are as follows. Although the specific embodiment described is a word processor, for example, the present invention can be applied to the power supplies of general portable type computer systems such as lap-top personal computer systems. Also, in place of the nickel-cadmium cell mentioned hereinbefore, any suitable secondary cell can be used such as nickel-zinc cells, alkali-manganese cells and the like. Furthermore, the power supply can be constructed in accordance with the present invention in order to be detachably fixed on the upper surface of the electric appliance rather than the bottom.

## Claims

1. A portable electric appliance including a power supply (5) fixed to the appliance and comprising a solar cell (11), a secondary cell (15) connected to said solar cell, and a charging circuit (17) by which electric energy generated by said solar cell may be accumulated in said secondary cell, an electrical connection (19) being provided between said electric appliance and said power supply (5) for supplying electric energy from said secondary cell (15) to said appliance, characterized in that said power supply (5) is detachable from said appliance and switch means (21) are provided whereby when said power supply (5) is detached from said appliance said solar cell (11) is connected to said secondary cell (15) for accumulation of solar energy.

2. The electric appliance of claim 1 wherein said power supply (5) is adapted to be mounted on the bottom of said appliance.

3. The electric appliance of claim 1 or 2 wherein said power supply (5) comprises a flat panel supporting said solar cell (11) thereon and a pair of housings (13) raised from opposed edges of said panel.

4. The electric appliance of claim 3 wherein one of said housings (13) accommodates said secondary cell (15) and the other accommodates said charging circuit (17).

5. The electric appliance of any preceding claim comprising a personal or lap-top computer or word processor.

6. The electric appliance of any preceding claim wherein said switch means (21) is responsive to the power supply (5) being detached from the appliance for connecting the solar cell (11) to the secondary cell (15).

## Patentansprüche

1. Tragbares elektrisches Gerät mit einer am Gerät befestigten Stromversorgung (5) mit einer Solarzelle (11), einer Sekundärzelle (15), die mit der Solarzelle verbunden ist, und einer Ladeschaltung (17), durch die von der Solarzelle erzeugte elektrische Energie in der Sekundärzelle angesammelt werden kann, wobei eine elektrische Verbindung (19) zwischen dem elektrischen Gerät und der Stromversorgung (5) vorhanden ist, um dem Gerät elektrische Energie von der Sekundärzelle (15) zuzuführen, **dadurch gekennzeichnet**, daß die Stromversorgung (5) vom Gerät abnehmbar ist und eine Schaltereinrichtung (21) vorhanden ist, durch die dann, wenn die Stromversorgung (5) vom Gerät abgenommen ist, die Solarzelle (11) mit der Sekundärzelle (15) verbunden wird, um Solarenergie anzusammeln.

2. Elektrisches Gerät nach Anspruch 1, bei dem die Stromversorgung (5) so ausgebildet ist, daß sie an der Unterseite des Geräts angebracht werden kann.

3. Elektrisches Gerät nach einem der Ansprüche 1 oder 2, bei dem die Stromversorgung (5) eine ebene Platte aufweist, die die Solarzelle (11) und ein Paar Gehäuse (13) trägt, die von entgegengesetzten Kanten der Platte hochstehen.

4. Elektrisches Gerät nach Anspruch 3, bei dem eines der Gehäuse (13) die Sekundärzelle (15) beherbergt und das andere die Ladeschaltung (17) beherbergt.

5. Elektrisches Gerät nach einem der vorstehenden Ansprüche, mit einem PC oder einem Laptop-Computer oder einem Textprozessor.

6. Elektrisches Gerät nach einem der vorstehenden Ansprüche, bei dem die Schaltereinrichtung (21) darauf anspricht, wenn die Stromversorgung (5) vom Gerät abgenommen wird, um 5 die Solarzelle (11) mit der Sekundärzelle (15) zu verbinden.

## Revendications

1. Appareil électrique portatif incluant une alimentation (5) fixée à l'appareil et comprenant une pile solaire (11), une pile secondaire (15) connectée à ladite pile solaire, et un circuit de charge (17) grâce auquel l'énergie électrique produite par ladite pile solaire peut être emmagasinée dans ladite pile secondaire, un raccordement électrique (19) étant installé entre ledit appareil électrique et ladite alimentation (5) pour transmettre l'énergie électrique de ladite pile secondaire (15) au dit appareil électrique, caractérisé en ce que ladite alimentation (5) est détachable dudit appareil électrique et des moyens de commutation (21) sont prévus pour que ladite pile solaire (11) soit connectée à ladite pile secondaire (15) lorsque ladite alimentation (5) est détachée dudit appareil afin d'emmagasiner de l'énergie électrique.

2. Appareil électrique selon la revendication 1 dans lequel ladite alimentation (5) peut être montée sur la partie inférieure dudit appareil.

3. Appareil électrique selon la revendication 1 ou 2 dans lequel ladite alimentation (5) comprend un panneau plat supportant ladite pile solaire (11) et une paire de logements (13) s'élevant à partir des côtés opposés dudit panneau.

4. Appareil électrique selon la revendication 3 dans lequel un desdits logements (13) reçoit ladite pile secondaire (15) et l'autre reçoit ledit circuit de charge (17).

5. Appareil électrique selon l'une des revendications précédentes pouvant être un ordinateur ou un appareil de traitement de texte personnel ou portable.

6. Appareil électrique selon l'une des revendications précédentes dans lequel ledit moyen de commutation (21) réagit au fait que l'alimentation (5) soit détachée de l'appareil pour connecter la pile solaire (11) à la pile secondaire (15).
